# FASCICULE DE BREVET EUROPEEN

(11) **EP 1 194 454 B1**
(45) Date de publication et mention de la délivrance du brevet: **17.03.2004**
(21) Numéro de dépôt: 00951612.1
(22) Date de dépôt: 20.06.2000
(51) Int. Cl.: C08F 2/28

(54) **DISPERSIONS CATIONIQUES HYDROPHOBES STABILISEES PAR DES COPOLYMERES MALEIMIDES DE FAIBLE MASSE MOLECULAIRE, POUR LE COLLAGE DU PAPIER**
DURCH NIEDRIGMOLEKULARE MALEIMIDCOPOLYMERE STABILISIERTE HYDROPHOBE KATIONISCHE DISPERSIONEN FÜR DIE PAPIERLEIMUNG
HYDROPHOBIC CATIONIC DISPERSIONS STABILISED BY LOW MOLECULAR WEIGHT MALEIMIDE COPOLYMERS, FOR PAPER SIZING

(30) Priorité: 21.06.1999 FR 9907910
(43) Date de publication de la demande: 10.04.2002
(73) Titulaire: Atofina, 92800 Puteaux (FR)
(72) Inventeur: BRETEMIEUX, Isabelle, 60580 Coye la Foret (FR); DUMOUSSEAUX, Christophe, Shinjuku-ku (FR); VERGE, Christophe, F-60580 Coye la Foret (FR); FERET, Bruno, 78960 VOISINS LE BRETONNEX (FR); FLAT, Jean-Jacques, F-27470 Serquigny (FR)
(74) Mandataire: Chaillot, Geneviève
(86) Numéro de dépôt international: PCT/FR2000/001692
(87) Numéro de publication internationale: WO 2000/078818

(56) Documents cités:
- EP-A- 0 810 323
- US-A- 3 444 151

## Description

La présente invention se rapporte au domaine du collage du papier et en particulier aux agents de collage et plus particulièrement aux agents de collage à base d'une dispersion aqueuse cationique de polymères hydrophobes. Elle se rapporte aussi au procédé d'obtention de telles dispersions.

Un bon agent de collage est souhaité pour l'ensemble des papiers, en particulier les papiers impression écriture, les papiers étiquettes, les papiers recyclés et les papiers d'emballage.

De manière générale, il existe deux sortes d'agents de collage : de surface ou interne. Par agent de collage de surface on entend un agent appliqué en surface des papiers, en général conjointement à l'amidon, à l'aide d'une presse encolleuse, en revanche par collage interne on entend un agent ajouté avec les fibres dans la partie humide de la fabrication du papier.

Un bon agent de collage de surface permet aux fabricants de papier d'obtenir une bonne résistance à l'eau de leur papier en réduisant et même parfois en éliminant un collage interne qui requiert une quantité plus importante de produit qu'un collage de surface. Il permet aussi d'obtenir de bonnes propriétés de surface du papier, particulièrement importantes pour obtenir de bonnes propriétés d'imprimabilité des papiers.

II est maintenant connu de l'homme du métier d'utiliser comme agent de collage de surface des polymères en émulsion ou en dispersion en association avec de l'amidon de préférence à des polymères en solution. Ils permettent d'obtenir des agents de collage ayant un extrait sec élevé avec une viscosité faible. Ils provoquent moins de problème de moussage que les polymères en solution du type Styrène Acide Acrylique ou Styrène Anhydride Maléique par exemple. Ces dispersions peuvent être anioniques ou cationiques, ces dernières étant moins courantes et plus difficiles à synthétiser.

Du coté des agents de collage interne l'homme du métier est à la recherche d'un produit qui puisse être utilisé sans agent de rétention et sans étape de mûrissement. Les agents de collage interne les plus courant, sont l'alkyl cétène dimère (AKD), les alkyls d'anhydride succinique (ASA) et les collophanes. Ils ne conviennent pas dans toutes les conditions de fabrication et sur tous les types de pâtes et nécessitent parfois l'utilisation d'un promoteur cationique.

Les agents de collage de surface sont connus de l'homme du métier et existent sous forme de dispersions anioniques. Ils sont abondamment décrits dans la littérature. Ils sont synthétisés par polymérisation en émulsion en utilisant comme émulsifiant un copolymère anionique de faible masse moléculaire. Il est connu de l'homme du métier que l'absence de tensioactif lors de la synthèse et une très fine taille de particule sont préférables pour obtenir une bonne efficacité lors du traitement de surface. Le brevet US 08434600 décrit par exemple la synthèse en émulsion à partir de copolymères Styrène Acide Acrylique utilisé sans cotensioactif pour donner des émulsions avec une taille de particule de 65 nm tandis que le brevet FR 9606737 revendique l'utilisation de dispersions de taille 55 nm environ synthétisées à l'aide de copolymères Styrène Anhydride Maléique (SMA).

Par contre ces émulsions anioniques présentent certains inconvénients. En particulier elles se fixent peu sur les fibres cellulosiques qui sont légèrement anioniques ce qui entraîne des problèmes de recyclage lors de circuits fermés. Un dosage important est nécessaire pour obtenir de bonnes propriétés de collage car une partie de la dispersion ne reste pas à la surface et va dans toute l'épaisseur de la feuille de papier. De plus, de telles émulsions anioniques ne sont pas compatibles avec certains amidons comme par exemple les amidons cationiques.

Des dispersions cationiques ont donc été envisagées comme agents de collage. Plusieurs méthodes de synthèse sont possibles. Celle qui se révèle la plus pertinente et qui relève de la présente invention concerne la polymérisation en émulsion à l'aide d'un copolymère cationique de faible masse. Le brevet DE 2454397 revendique l'utilisation d'oligomères à base principalement de styrène et d'acrylate de diméthyl amino éthyle synthétisés dans un solvant organique. Le brevet DE 3401573 revendique l'utilisation de terpolymères de styrène, d'acrylonitrile et d'acrylate ou methacrylate de diméthyl-amino-éthyle. Ces deux procédés ont l'inconvénient d'utiliser un solvant organique qui doit être enlevé avant ou après la polymérisation en émulsion. Ils ne sont donc ni économiques ni écologiques. De plus, des problèmes de stabilité de l'émulsion à des températures élevées typiques des bains de collage ou à haut gradient de cisaillement peuvent exister. Un autre brevet, le DE 4200715 revendique l'utilisation d'un polyamidoamine cationique modifié hydrophobe. Ce procédé conduit à des émulsions de très faible extrait sec et avec des tailles de particules autour de 160 nm. Ces émulsions ne sont donc ni économiques ni performantes dans la présente application.

II s'avère donc impossible selon l'art antérieur d'utiliser comme agent de collage des émulsions cationiques ayant un extrait sec élevé, une fine taille de particules et qui soient synthétisées sans solvant organique ni tensioactif.

Le brevet américain US 3.444.151 décrit cependant la synthèse de dérivés imides (II) de copolymères à base d'anhydride maléique (I) et revendique leur utilisation en polymérisation en émulsion en vue de la synthèse de latex. Ce brevet revendique cependant l'utilisation de composé (II) à raison de 2 à 20% en poids par rapport aux monomères, ce qui est en fait insuffisant en vue de l'obtention de latex correctement stabilisés en l'absence de tensioactif classique (les exemples repris dans le brevet sont d'ailleurs tous basés sur l'utilisation conjointe de tensioactif traditionnel).

La présente invention propose un procédé simple de synthèse d'émulsions cationiques et d'application de ces émulsions sur le papier qui donnent des résultats bien supérieurs aux émulsions anioniques équivalentes.

La présente invention se distingue de l'art antérieur en ce qu'elle utilise un nouveau type d'émulsions cationiques destinées à être utilisées comme agent de collage, émulsions qui sont obtenues en présence de dérivés imides (II) de copolymères à base d'anhydride maléique utilisés en proportions suffisantes afin d'éviter le recours au tensioactifs traditionnels. Les émulsions ainsi synthétisées présentent une grande hydrophobie, une fine taille de particule, un extrait sec élevé, un faible moussage et une bonne stabilité mécanique, au gel-dégel et pour les températures élevées. Elles peuvent être utilisées aussi bien comme agent de collage de surface que comme agent de collage interne. Dans l'application en surface elles sont compatibles avec un grand nombre d'amidon. Dans l'application interne elles permettent un collage immédiat sans utilisation d'agent de rétention.

L'invention concerne donc l'application comme agents de collage des papiers de dispersions cationiques résultant de la polymérisation en émulsion d'un mélange de monomères principalement hydrophobes en présence d'une solution aqueuse de dérivés imides de copolymères à base d'anhydride maléique de faible masse moléculaire et en l'absence de tensioactif traditionnel. La synthèse en émulsion utilisant ces copolymères conduit à des dispersions cationiques fortement hydrophobes, à extrait sec élevé et à faible taille de particule qui confèrent à la fois une très bonne hydrophobie aux papiers traités et une bonne imprimabilité jet d'encre.

Un des objets de l'invention est la dispersion aqueuse de polymères hydrophobes pouvant être utilisée seule ou en combinaison avec d'autres agents comme agent de collage du papier. Elle peut être obtenue selon le procédé décrit ci-après et qui constitue lui-même un autre objet de l'invention.

Le procédé d'obtention de la dispersion aqueuse utilisée comme agent de collage des papiers se fait par polymérisation en émulsion à partir d'un dérivé imide (II) d'un copolymère à base d'anhydride maléique. La synthèse de ces dérivés basés sur la réaction d'une diamine et d'un polymère (I) à base d'anhydride maléique est décrite dans le brevet US 3.444.151. Brièvement les dérivés imides sont obtenus par réaction entre un polymère (I) et une diamine primaire tertiaire, par exemple la diméthylpropylène diamine (DMAPA) de préférence par un procédé en masse. La fonction amine primaire va réagir sur la fonction anhydride pour former un acide amique puis ce cycle va se refermer pour former un dérivé imide Il du polymère I. Les dérivés d'amine utilisés dans cette invention sont de préférence ceux du type I décrits dans le brevet US 3.444.151, c'est à dire ceux où une diamine réagit de façon complète sur la fonction anhydride avec un rapport molaire de 1 pour 1. L'utilisation de copolymères présentant des fonctions anhydrides ou acides résiduelles, résultant d'une réaction en défaut d'amine est également possible.

Le polymère I peut être un copolymère ou un terpolymère constitué d'anhydride maléique et de monomères hydrophobes choisis parmi les alpha-oléfines, les aromatiques éthyléniques insaturés, les éthers vinylique ou les éthers allylique. Le copolymère préféré de l'invention est un copolymère de styrène et d'anhydride maléique (SMA) avec un rapport Styrène sur Anhydride Maléique de 1/1 à 6/1, de préférence de 2/1 à 4/1 La masse moléculaire en nombre du copolymère émulsifiant est comprise entre 500 et 20000, de préférence entre 2000 et 5000. Le taux d'imidisation dudit copolymère peut être compris entre 50 et 100%. Le pourcentage massique de cet oligomère dans l'extrait sec final est compris entre 10% et 40%, de préférence entre 20% et 30%.

Le polymère I sera choisi de préférence parmi les copolymères de styrène et d'anhydride maléique possédant des indices d'acides allant de 500 à 200 mg KOH/g et commercialisés par la société Elf Atochem sous les nom de SMA® 1000, SMA® 2000, SMA® 3000, SMA®EF30, et SMA®EF40 et SMA®EF60.

Après imidisation le copolymère est ensuite- mis en solution aqueuse, neutralisé avec un acide pour donner un oligomère émulsifiant cationique. L'acide utilisé sera de préférence un acide faible volatil comme l'acide éthanoique ou méthanoique.

L'émulsion cationique est alors synthétisée en utilisant les techniques conventionnelles de la polymérisation en émulsion, dans une solution aqueuse comportant une quantité de 30 à 50 % par rapport au monomères, de l'émulsifiant cationique (II) précédemment décrit, et sans addition de tensioactif micromoléculaire classique, en présence d'un système d'amorçage radicalaire usuel et d'un mélange de monomères éthyléniquement insaturés, par exemple composé de styrène et d'esters (meth)acryliques.

L'amorceur radicalaire peut être un amorceur hydrosoluble tel que les persulfates d'ammonium, de potassium ou de sodium, éventuellement associé à un agent réducteur de type métabisulfite de sodium ou encore un peroxyde d'hydrogène ou un hydroperoxyde comme l'hydroperoxyde de tertio butyle, associé à un agent réducteur comme l'acide ascorbique le formaldéhyde sulfoxylate de sodium. Cet amorceur peut également être organosoluble comme les dérivés azoïques tel l'azobisobutyronitrile ou les peroxydes organiques.

La température de polymérisation est comprise entre 30°C et 100°C, de préférence entre 60°C et 90°C et sera adaptée au système d'amorçage utilisé.

Les monomères sont choisis notamment de façon à obtenir la température de transition vitreuse (Tg) désirée, mais aussi la polarité, la fonctionnalité ou le degré de réticulation recherchés. Cette Tg peut être comprise entre -70°C et 100 °C, de préférence entre 0°C et 50°C.

A titre d'exemple les monomères seront choisis parmi l'acrylate de méthyle, l'acrylate d'éthyle, l'acrylate de butyle, l'acrylate de 2-éthyl hexyle, le méthacrylate de méthyle et plus généralement les (méth)acrylate d'alkyles de formule :

CH2 = C(R1)COO R2

avec R1 =H, CH3 et R2 groupement comportant 1 à 22 C.
les (méth)acrylates de perfluoroalkyles de formule :

CH2 = C(R1)COO-(CH2)n-Cn'F2n' + 1

avec R1 = H, CH3; n = 1-4, n' = 1-14
l'acétate de vinyle, le styrène, les esters versatiques, l'acide acrylique, l'acide méthacrylique, l'acrylamide, le diméthacrylate d'éthylène glycol, etc.

Les dispersions cationiques de l'invention ont un extrait sec compris entre 20% et 50%, de préférence entre 40% et 50% et une taille de particule comprise entre 50 et 500 nm, notamment entre 50 nm et 300 nm, avec une taille de particule moyenne de préférence inférieure à 100 nm. Elles ont une très bonne compatibilité avec les amidons susceptibles d'être utilisé dans la presse encolleuse et ceci même à température élevée, que ce soit des amidons natifs, des amidons faiblement anioniques ou des amidons cationiques. Elles ont une faible viscosité, de préférence inférieure à 100 mPa.s pour un extrait sec de 41%. Elles ont une très bonne stabilité dans le temps, une très bonne stabilité mécanique et une très bonne résistance au cycle gel-dégel. Elles confèrent aux papiers traités une très bonne hydrophobie et ceci à des taux de traitement bien inférieur à ceux d'une émulsion aniohique équivalente. Elles permettent notamment de traiter en surface des papiers de type test-liner destinés à l'emballage carton où une très bonne hydrophobie des papiers est requise. Elles permettent aussi d'utiliser entre autres un amidon et des pigments cationiques lors du traitement de surface du papier et d'obtenir une très bonne imprimabilité jet d'encre. Les particules présentes dans les encres d'impression sont en effet en général anioniques et vont se fixer plus facilement à la surface du papier si des composants cationiques sont présents.

La présente invention porte également sur une composition pour le collage externe des papiers et cartons contenant la dispersion selon l'invention et l'amidon pris dans un rapport massique allant de 5 à 50%.

Les procédés de traitement du papier par collage externe ou interne sont décrits dans les exemples applicatifs.

### Exemples

Les exemples suivants illustrent l'invention.

### Exemples de synthèse

### Exemple 1:

### Synthèse de l'agent tensio-actif cationique

Cet exemple décrit le procédé de synthèse d'un dérivé imide d'un copolymère Styrène Anhydride Maléique désigné par SMA

Dans un réacteur de deux litres chauffé électriquement et muni d'un dispositif d'agitation adapté aux milieux visqueux, on introduit tout d'abord la diméthylpropylène diamine (DMAPA) puis le SMA à température ambiante. Le mélange réactionnel est alors chauffé jusqu'à 150°C avant mise en route de l'agitation, puis porté à 200°C. A partir de cet instant un pallier réactionnel de 75 minutes est effectué avant extrusion du SMA imidisé par la vanne de fond du réacteur, dans un bain d'azote liquide. Le SMA imidisé obtenu est ensuite broyé.

Pour l'exemple S1-1 le milieu réactionnel comporte 170 g de DMAPA et 830 g d'un copolymère SMA constitué de 79.8% massique de styrène et 20.2% massique d'anhydride maléique, de masse moléculaire moyenne en nombre 3000 (disponible commercialement sous le nom de SMA®EF40 auprès de Elf Atochem S.A.).

On obtient un copolymère en poudre S1-1 dont les caractéristiques sont les suivantes:
DMAPA résiduel = 600 ppm
Tg=112°C
Indice d'acide = 7.5 mg KOH/g.

### Exemples S1-2 ; S1-3 et S1-4

Le même type d'essai peut être réalisés avec d'autres copolymères du styrène et de l'anhydride maléique présentant d'autres ratio Styrène / anhydride maléique, la nature des produits mis en oeuvre, les quantités utilisées, et les caractéristiques finales des produits obtenus étant résumées dans le tableau suivant :

| Référence | S1-2 | S1-3 | S1-4 |
|---|---|---|---|
| Nature SMA | SMA®1000 | SMA®2000 | SMA®3000 |
| Quantité de SMA (g) | 690 | 760 | 800 |
| Quantité de DMAPA (g) | 310 | 240 | 200 |
| Indice d'acide (mg KOH/g) | 7 | 2.6 | 10.6 |
| Taux de DMAPA résiduel (ppm) | 600 | 600 | 600 |
| Tg (°C) | 82 | 80 | 91 |

### Exemple 2 :

### Mise en solution du tensio-actif cationique(TA)

Dans un réacteur tricol en verre d'une capacité de 1 litre équipé d'une agitation centrale, d'un condenseur, d'une sonde de température, et d'un dispositif d'introduction d'acide acétique on introduit 171 g du TA S1-1, 644 g d'eau et 39 g d'acide acétique glacial. L'ensemble des réactifs est chauffé à 60°C et maintenu sous agitation jusqu'à dissolution complète de l'oligomère.

La solution aqueuse S2-1 obtenue présente une concentration de S1-1 d'environ 20%. La mise en solution du TA peut éventuellement être directement réalisée dans le réacteur de polymérisation en étape préliminaire à l'exemple S3-1.

### Exemple 3 :

### Synthèse de la dispersion cationique

Cet exemple décrit la synthèse d'une dispersion cationique selon l'invention.

Dans un réacteur à double enveloppe en verre d'une capacité de 1 litre, équipé d'une agitation centrale, d'un condenseur, d'une sonde de température, et d'un dispositif d'introduction en continu d'une solution d'amorceur, et d'un mélange ou d'une préémulsion de monomères, on introduit 642 g de solution aqueuse S2-1 comportant 20% d'oligomère S1-1 et on porte le milieu réactionnel à 85°C.

On prépare par ailleurs une solution d'amorceur par dissolution de 3 g de persulfate d'ammonium dans 60 g d'eau déminéralisée, et un mélange de monomère composé de 138 g de Styrène et 162 g d'acrylate de butyle.

Lorsque le milieu réactionnel est à 85°C, on procède à l'alimentation de la solution d'amorceur et du mélange de monomères sur une période de 2 heures, sous agitation et en maintenant la température à 85°C.

Le milieu réactionnel est alors maintenu sous agitation deux heures supplémentaires à 85°C, puis refroidi à température ambiante, filtré sur une toile de 100 µm, et vidangé pour conduire à la dispersion S3-1 qui présente les caractéristiques suivantes.
Extrait sec = 41 %
Viscosité mésurée à l'aide d'un appareil Brookfield à 25°Cselon la norme est de 35 mPa.s
pH = 4
Diamètre moyen des particules = 95 nm
Tg=25 °C

### Exemple comparatif 1

Un agent de collage est synthétisé de la même façon que celle décrite dans l'exemple 1 du brevet FR9606737 pour donner une émulsion anionique S4 stabilisé par un copolymère Styrène Anhydride Maléique neutralisé à l'ammoniaque, constitué de 74.3% massique de styrène et 25.7% massique d'anhydride maléique. Cette émulsion est donc l'équivalent anionique de l'émulsion S3-1.

Cette émulsion S4 présente les caractéristiques suivantes :
Extrait sec = 23.5%
Viscosité Brookfield à 25°C = 20 mPa.s
pH = 8.85
Diamètre moyen des particules = 55 nm
Tg=25 °C

### Exemples d'application

Trois papiers sont traités en surface à l'aide d'une presse encolleuse de laboratoire.

Les deux premiers, de type impression écriture, ont un grammage de 80 g/m² et sont collés avec de l'alkylcétène dimère (Aquapel®315 de Hercules, ci-après AKD) à hauteur de 0.2% ou 0.6% par rapport au poids du papier.

Un autre papier du type Test -Liner destiné à être utilisé pour l'application carton d'emballage a un grammage de 130 g/m² et n'a subi aucun collage interne.

Les deux tests suivants ont été effectués pour mesurer l'hydrophobie et la résistance à la pénétration de solutions aqueuses des papiers traités:
Test Cobb: ce test est bien connu de l'homme du métier et est décrit dans la norme NF EN 20535-ISO 535. La quantité d'eau absorbée après un temps donné est donné en g/m². On pratique ici le test Cobb avec un temps de contact de 60 secondes (Cobb₆₀) ou de 30 minutes (Cobb₁₈₀₀).
Test HST: Ce test procède selon la norme TAPPI TEST METHODS T 530 OM-96. Les papiers à tester ont une dimension de 6 x 6 cm et sont soumis sur une face à une encre verte (réalisé avec 1.25% de colorant naphtol vert B, 1% d'acide formique et le pourcentage restant d'eau déminéralisée). Le temps de pénétration de l'encre aqueuse est déterminé par réflexion d'une source lumineuse sur la face opposée lorsque le pourcentage de réflexion atteint 80%.

### Exemple A1

Cet exemple montre l'avantage des agents de collage selon l'invention pour le traitement de surface des papiers impression écriture quant à leur résistance à l'eau et à la pénétration de l'encre. Un papier impression écriture acceptable doit avoir un Cobb₆₀ inférieur à 30 et un HST supérieur à 100.

Le papier traité avec 0.2% d'AKD est collé en surface avec une solution aqueuse contenant:
3% en poids d'amidon faiblement anionique AMYLIS® 100 P (Roquette)
0.25% et 0.5% en poids de matière active des émulsions S3-1 et S4

Le complément étant amené à 100% par ajout du complément nécessaire d'eau déminéralisée.

Les résultats suivants montrent bien la supériorité de l'application selon l'invention à faible quantité de traitement comparée à l'application à l'aide d'un agent de collage anionique :

| Produits | Amidon seul | S3-1 0.25% | S3-1 0.5% | S4 0.25% | S4 0.5% |
|---|---|---|---|---|---|
| Cobb₆₀ (g/m²) | > 100 | 27.5 | 22.5 | 71 | 23 |
| HST (s) | 0 | 127 | 197 | 24 | 190 |

### Exemple A2

Cet exemple montre l'avantage des agents de collage selon l'invention pour le traitement de surface des papiers impression écriture à l'aide d'un amidon cationique. Celui ci apporte de grands avantages pour les propriétés d'imprimabilité.

Les papiers traités avec 0.2% et 0.6% d'AKD sont collés en surface avec une solution contenant :
3% en poids d'amidon cationique CATOSIZE® 240 (National Starch)
0.5% en poids de matière active des émulsions S3-1 et S4

Le complément étant amené à 100% par ajout du complément nécessaire d'eau déminéralisée.

Les résultats suivants, en comparaison avec ceux de l'exemple A1, montrent bien la compatibilité de la dispersion selon l'invention avec tout type d'amidon. Alors que les propriétés de l'émulsion S3-1 sont renforcées en présence d'un amidon cationique, celles de l'émulsion S4 chutent, et sont même inférieures à celles de l'amidon seul pour le papier à 0.6% d'AKD, en raison d'une incompatibilité dans la sauce de collage.

| Papier avec 0.2% d'AKD | | | |
|---|---|---|---|
| Produits | Amidon seul | S3-1 | S4 |
| Cobb₆₀ (g/m²) | 100 | 20.7 | 65 |
| HST (s) | 0 | 300 | 8 |

| Papier avec 0.6% d'AKD | | | |
|---|---|---|---|
| Produits | Amidon seul | S3-1 | S4 |
| Cobb₆₀ (g/m²) | 52.5 | 19.5 | 59.5 |
| HST (s) | 9 | 120 | 7 |

### Exemple A3

Cet exemple montre l'avantage des agents de collage selon l'invention pour le traitement de surface des papiers pour carton d'emballage quant à leur résistance à l'eau. Pour ces papiers une très bonne résistance à l'eau est requise sur des temps longs. Un papier de type Test Liner destiné au carton d'emballage acceptable doit avoir un Cobb₁₈₀₀ égal ou inférieur à 120.

Le papier de type Test Liner précédemment décrit est collé en surface avec une solution contenant :
8% en poids d'amidon faiblement anionique AMYLIS® 100 P (Roquette)
0.7% et 1.2% en poids de matière active des émulsions S3-1 et S4

Le complément étant amené à 100% par ajout du complément nécessaire d'eau déminéralisée.

Les résultats suivants montrent la possibilité de traiter avec des quantités raisonnables d'agent de collage selon l'invention des papiers de type Test Liner n'ayant subi aucun collage interne.

| Produits | Amidon seul | S3-1 0.7% | S3-1 1.2% | S4 0.7% | S4 1.2% |
|---|---|---|---|---|---|
| Cobb₆₀ (g/m²) | 200 | 30 | 20 | 61 | 28 |
| Cobb₁₈₀₀ (g/m²) | 250 | 150 | 105 | 165 | 150 |

### Exemple A4

Cet exemple décrit l'utilisation de la dispersion cationique de l'invention comme agent de collage interne.

Le papier est obtenu suivant le processus-qui consiste à réaliser des fermettes sur un appareil Franck à partir d'une pâte raffinée à un certain degré d'égouttabilité Shopper Riegler (voir la norme NF Q 50003). A la suspension fibreuse constituée de 5 g/l de fibres dans l'eau on ajoute l'agent de collage. On poursuit l'agitation pendant 3 minutes. On réalise la formette à un grammage moyen de 65 g/m², après égouttage, essorage et séchage pendant 5 minutes à 95°C. La pâte utilisée ici est constituée à 50% de fibres courtes et 50% de fibres longues et à un degré Shopper Riegler de 25.

On ajoute 1 % d'agent de collage rapportée sur la matière fibreuse sèche. Les agents de collage utilisés sont les émulsions S3-1 et S4, ainsi que l'AKD (Aquapel®315 de Hercules). Les formettes traitées avec l'AKD subissent un mûrissement accéléré dans une étuve pendant 10 minutes à 110°C.

| Agent de collage | Aucun | AKD | S3-1 | S4 |
|---|---|---|---|---|
| Cobb₆₀ | > 100 | 42 | 24 | > 100 |

Comme on le voit au vu de ces résultats l'émulsion S3-1 donne des résultats en collage tout à fait correct sans agent de rétention, alors que les performances sont médiocres avec l'AKD utilisé seul. De plus aucune étape de mûrissement n'est nécessaire. L'émulsion anionique ne donne aucun résultat car elle n'est pas fixée sur les fibres.

## Revendications

1. Procédé d'obtention d'une dispersion aqueuse cationique de polymères à caractère hydrophobe basé sur la polymérisation en émulsion à une température allant de 30 à 100° C d'au moins un monomère polymérisable en émulsion en présence de 30 à 50 % en poids par rapport au(x) monomère(s) d'un copolymère styrène / anhydride maléique imidisé agissant comme seul tensio-actif, l'extrait sec de la dispersion étant de 20 à 50 %.

2. Procédé selon la revendication 1 **caractérisé en ce que** le styrène et l'anhydride maléique dudit copolymère sont pris dans un rapport 1/1 à 6/1 et de préférence de 2/1 à 4/1.

3. Procédé selon la revendication 1 ou 2 **caractérisé en ce que** ledit copolymère a une masse moyenne en nombre comprise entre 500 et 20000 et de préférence entre 2000 à 5000.

4. Procédé selon l'une des revendications précédentes **caractérisé en ce que** le taux d'imidization dudit copolymère est compris entre 50 et 100 %.

5. Procédé selon l'une des revendications précédentes **caractérisé en ce que** ledit copolymère est imidisé par la diméthylpropylène diamine.

6. Procédé selon l'une quelconque des revendications précédentes **caractérisé en ce que** le monomère est choisi dans les groupes contenant :
- les monomères hydrophobes tels que l'acrylate de méthyle, l'acrylate d'éthyle, l'acrylate de butyle, l'acrylate de 2-éthyl hexyle, le méthacrylate de méthyle et plus généralement les (méth)acrylate d'alkyle de formule :
CH2=CH(R1)COO R2
avec R1=H, CH3 et R2 groupement comportant 1 à 22 C
les (méth)acrylates de perfluoroalkyles de formule :
CH2=CH(R1)COO-(CH2)n-Cn'F2n'+1
avec R1 = H, CH3; n = 1-4, n' = 1-14 l'acétate de vinyle, le styrène, les esters versatiques,
- les monomères relativement hydrophiles tels que l'acide acrylique, l'acide méthacrylique, l'acrylamide, le (méth)acrylate d'éthylène glycol.

7. Dispersion cationique de polymères à caractère hydrophobe telle qu'on peut l'avoir par le procédé des revendications 1 à 6 **caractérisée en ce que** les particules de polymères ont une taille comprise entre 50 et 500 nm et de préférence inférieure à 300 nm.

8. Dispersion selon la revendication 7 **caractérisé en ce que** le polymère à caractère hydrophobe a une température de transition vitreuse comprise entre - 70°C et 100°C et de préférence entre 0 et 50°C.

9. Utilisation de la dispersion selon la revendication 7 ou 8 comme agent de collage interne pour le traitement des papiers et cartons.

10. Utilisation de la dispersion selon la revendication 7 ou 8 en combinaison avec d'autres agents de collage tels que l'amidon pour le collage de surface des papiers et cartons.

11. Composition pour le collage externe des papiers et cartons contenant la dispersion selon l'une des revendications 7 ou 8 et l'amidon pris dans un rapport massique allant de 5 à 50 %.

## Claims

1. Process for producing an aqueous cationic dispersion of polymers with a hydrophobic nature based on the emulsion polymerization at a temperature ranging from 30 to 100°C of at least one emulsion-polymerizable monomer in the presence of 30 to 50% by weight, with respect to the monomer(s), of an imidized styrene/maleic anhydride copolymer acting as sole surfactant, the solids content of the dispersion being from 20 to 50%.

2. Process according to Claim 1, **characterized in that** the styrene and the maleic anhydride of the said copolymer are taken in a ratio 1/1 to 6/1 and preferably of 2/1 to 4/1.

3. Process according to Claim 1 or 2, **characterized in that** the said copolymer has a number-average mass of between 500 and 20,000 and preferably between 2000 to 5000.

4. Process according to one of the preceding claims, **characterized in that** the degree of imidization of the said copolymer is between 50 and 100%.

5. Process according to one of the preceding claims, **characterized in that** the said copolymer is imidized by dimethylpropylenediamine.

6. Process according to any one of the preceding claims, **characterized in that** the monomer is chosen from the groups comprising:
- hydrophobic monomers, such as methyl acrylate, ethyl acrylate, butyl acrylate, 2-ethylhexyl acrylate, methyl methacrylate and more generally alkyl (meth)acrylate of formula:
CH₂=C(R₁)COOR₂,
with R₁=H or CH₃ and R₂ a group comprising 1 to 22 C,
perfluoroalkyl (meth)acrylates of formula:
CH₂=C(R₁)COO-(CH₂)ₙ-C_{n'}F_{2n'+1},
with R₁=H or CH₃, n=1-4 and n'=1-14,
vinyl acetate, styrene or versatic esters,
- relatively hydrophilic monomers, such as acrylic acid, methacrylic acid, acrylamide or ethylene glycol (meth)acrylate.

7. Cationic dispersion of polymers with a hydrophobic nature as can be had by the process of Claims 1 to 6, **characterized in that** the polymer particles have a size of between 50 and 500 nm and preferably of less than 300 nm.

8. Dispersion according to Claim 7, **characterized in that** the polymer with a hydrophobic nature has a glass transition temperature of between -70°C and 100°C and preferably between 0 and 50°C.

9. Use of the dispersion according to Claim 7 or 8 as internal sizing agent in the treatment of papers and boards.

10. Use of the dispersion according to Claim 7 or 8 in combination with other sizing agents, such as starch, in the surface sizing of papers and boards.

11. Composition for the external sizing of papers and boards comprising the dispersion according to either of Claims 7 and 8 and starch taken in a ratio by mass ranging from 5 to 50%.

## Patentansprüche

1. Verfahren zum Erhalten einer wässerigen kationischen Dispersion von Polymeren mit hydrophobem Charakter, basierend auf der Polymerisation in Emulsion bei einer Temperatur von 30 bis 100 °C von mindestens einem Monomer, das in Emulsion in Gegenwart von 30 bis 50 Gew.-% im Verhältnis zu dem (den) Monomer(en) eines imidisierten Styrol-Maleinsäureanhydrids polymerisierbar ist, das als einziger oberflächenaktiver Stoff wirkt, wobei der Festkörpergehalt der Dispersion bei 20 bis 50 % liegt.

2. Verfahren nach Anspruch 1, **dadurch gekennzeichnet, dass** das Styrol und das Maleinsäureanhydrid des Copolymers in einem Verhältnis von 1/1 bis 6/1 und vorzugsweise von 2/1 bis 4/1 stehen.

3. Verfahren nach Anspruch 1 oder 2, **dadurch gekennzeichnet, dass** das Copolymer eine mittlere zahlenmäßige Masse zwischen 500 und 20000 und vorzugsweise zwischen 2000 bis 5000 aufweist.

4. Verfahren nach einem der vorhergehenden Ansprüche, **dadurch gekennzeichnet, dass** der Imidisierungsgrad des Copolymers zwischen 50 und 100 % liegt.

5. Verfahren nach einem der vorhergehenden Ansprüche, **dadurch gekennzeichnet, dass** das Copolymer durch Dimethylpropylendiamin imidisiert wird.

6. Verfahren nach einem der vorhergehenden Ansprüche, **dadurch gekennzeichnet, dass** das Monomer aus den Gruppen ausgewählt wird, die Folgendes enthalten:
- hydrophobe Monomere wie Methylacrylat, Ethylacrylat, Butylacrylat, 2-Ethylhexylacrylat, Methylmethacrylat und im Allgemeineren Alkyl(meth)acrylat der Formel:
CH2=C(R1)COO R2,
wobei R1 = H, CH3 und R2 eine Gruppe mit 1 bis 22 C,
Perfluoralkyl(meth)acrylate der Formel:
CH2=C(R1)COO-(CH2)n-Cn'F2n'+1,
wobei R1=H, CH3; n = 1-4, n'=1-14,
- Vinylacetat, Styrol, versatile Ester,
- relativ hydrophile Monomere wie Acrylsäure, Methacrylsäure, Acrylamid, Ethylenglycol(meth)acrylat.

7. Kationische Dispersion von Polymeren mit hydrophobem Charakter, die durch das Verfahren der Ansprüche 1 bis 6 erhalten werden kann, **dadurch gekennzeichnet, dass** die Polymerpartikel eine Größe zwischen 50 und 500 nm und vorzugsweise von weniger als 300 nm aufweisen.

8. Dispersion nach Anspruch 7, **dadurch gekennzeichnet, dass** das Polymer mit hydrophobem Charakter eine Glasübergangstemperatur zwischen - 70 °C und 100 °C und vorzugsweise zwischen 0 und 50 °C aufweist.

9. Verwendung der Dispersion nach Anspruch 7 oder 8 als Mittel für interne Leimung zur Behandlung von Papieren und Kartons.

10. Verwendung der Dispersion nach Anspruch 7 oder 8 in Verbindung mit anderen Leimungsmitteln wie Stärke für das Oberflächenleimen von Papieren und Kartons.

11. Zusammensetzung für die externe Leimung von Papieren und Kartons, welche die Dispersion nach einem der Ansprüche 7 oder 8 und Stärke in einem Masseverhältnis von 5 bis 50 % enthält.
